# EUROPÄISCHE PATENTSCHRIFT

(11) **EP 2 468 378 B1**
(45) Veröffentlichungstag und Bekanntmachung des Hinweises auf die Patenterteilung: **17.10.2018**
(21) Anmeldenummer: 11192267.0
(22) Anmeldetag: 07.12.2011
(51) Int. Cl.: B01D 36/00

(54) **Filtereinrichtung**
Filter device
Dispositif de filtre

(30) Priorität: 27.12.2010 DE 102010064180
(43) Veröffentlichungstag der Anmeldung: 27.06.2012
(73) Patentinhaber: MAHLE International GmbH, 70376 Stuttgart (DE)
(72) Erfinder: Donadei, Olivier, 95300 Ennery (FR)
(74) Vertreter: BRP Renaud & Partner mbB Rechtsanwälte Patentanwälte Steuerberater

(56) Entgegenhaltungen:
- EP-A1- 1 818 090
- EP-A1- 2 151 269
- CA-A1- 2 278 961
- JP-A- 2004 344 770
- US-A- 2 413 991
- US-A- 5 247 727

## Beschreibung

Die vorliegende Erfindung betrifft eine Filtereinrichtung mit einem, einen Filtergehäusedeckel und einen Filtertopf aufweisenden Filtergehäuse gemäß dem Oberbegriff des Anspruchs 1. Die Erfindung betrifft außerdem ein spezielles Ringfilterelement für eine derartige Filtereinrichtung.

Aus der EP 2 151 269 A1 ist eine gattungsgemäße Filtereinrichtung bekannt, deren Filtertopf eine bodenseitige Öffnung aufweist, in die zum Entfernen eines Ringfilterelementes ein Stift oder ein Finger eingeführt werden können. Hierdurch lässt sich die Demontage des Ringfilterelementes vereinfachen. Nachteilig hierbei ist jedoch, dass sich zwischen dem Ringfilterelement und der bodenseitigen Öffnung noch ein spezielles Auswerferglied befindet, das eine Kraftübertragung zum Ringfilterelement gewährleistet.

Die JP 2004 344 770 A zeigt eine Filtereinrichtung mit einem Ringfilterelement, das in einem Filtergehäuse angeordnet ist. Zum Entfernen des Ringfilterelements aus dem Filtergehäuse kommt ein von der Filtereinrichtung separates Werkzeug mit einem Griff und einem Spreizelement zum Einsatz, das durch eine Öffnung in einer Endscheibe des Ringfilterelements in das Innere des Ringfilterelements eingeführt und gespreizt wird, um das Ringfilterelement aus dem Filtergehäuse zu ziehen.

Die vorliegende Erfindung beschäftigt sich mit dem Problem, für eine Filtereinrichtung der gattungsgemäßen Art eine verbesserte, zumindest aber eine alternative Ausführungsform anzugeben, die sich insbesondere durch einen reduzierten Wartungsaufwand auszeichnet.

Dieses Problem wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, einen Filterwechsel bei einer Filtereinrichtung dadurch zu vereinfachen, dass ein erster Auswerfer vorgesehen wird, der entweder in eine bodenseitige Öffnung eines Filtertopfs eingesteckt oder eingeschraubt wird und dabei direkt auf eine untere Endscheibe eines zu entfernenden bzw. auszutauschenden Ringfilterelementes drückt und/oder dass an einer oberen Endscheibe des Ringfilterelementes ein zentrales Innengewinde vorgesehen ist, das mit einem Außengewinde eines zweiten Auswerfers verschraubt werden kann, so dass das Ringfilterelement mit dem zweiten Auswerfer aus dem Filtertopf, das heißt aus dem Filtergehäuse, gezogen werden kann. Die erfindungsgemäße Filtereinrichtung weist dabei in bekannter Weise ein, einen Filtergehäusedeckel und einen Filtertopf umfassendes Filtergehäuse auf, in welchem das Ringfilterelement angeordnet ist. Im Filtertopf ist dabei die oben erwähnte bodenseitige Öffnung vorgesehen, in die im Betriebszustand üblicherweise ein Wasserstandssensor dichtend eingeführt ist. Erfindungswesentlich ist nun, dass eine untere Endscheibe des Ringfilterelementes fluchtend zur bodenseitigen Öffnung eine Abstützfläche aufweist, so dass der erste Auswerfer, der durch die bodenseitige Öffnung geführt und in direktem Druckkontakt der Abstützfläche gebracht wird, das Ringfilterelement einfach aus dem Filtergehäuse drücken kann. Zusätzlich oder alternativ kann an der oberen Endscheibe des Ringfilterelementes ein zentrales Innengewinde vorgesehen werden, welches komplementär zu einem Außengewinde des zweiten Auswerfers ausgebildet ist, so dass der zweite Auswerfer mit der oberen Endscheibe des Ringfilterelementes verschraubt werden kann, um das Ringfilterelement anschließend aus dem Filtergehäuse zu ziehen. Beide Auswerfer vereinfachen dabei den Austausch des Ringfilterelementes erheblich und reduzieren dadurch den Wartungsaufwand der erfindungsgemäßen Filtereinrichtung.

Bei einer vorteilhaften Weiterbildung der erfindungsgemäßen Lösung, weist die bodenseitige Öffnung am Filtertopf ein Innengewinde und der erste Auswerfer ein komplementär dazu ausgebildetes Außengewinde auf. In diesem Fall kann nach dem Entfernen des Wasserstandssensor der erste Auswerfer einfach in die bodenseitige Öffnung eingeschraubt und während des Einschraubens gleichzeitig das Ringfilterelement nach oben aus dem Filtertopf gedrückt werden. Durch die Schraubmöglichkeit können eine besonders hohe Druckkraft und damit ein besonders einfaches Entfernen des Ringfilterelementes gewährleistet werden. Selbstverständlich ist alternativ auch denkbar, dass die bodenseitige Öffnung kein Innengewinde aufweist, so dass der erste Auswerfer zum Herausdrücken des Ringfilterelementes aus dem Filtertopf einfach in die bodenseitige Öffnung eingeführt bzw. eingesteckt wird, bis der in Druckkontakt mit der Abstützfläche an der unteren Endscheibe des Ringfilterelementes tritt und im Weiteren das Ringfilterelement auswirft.

Erfindungsgemäß ist eine Heizeinrichtung vorgesehen, das zusammen mit dem Ringfilterelement auswerfbar ist. Zusätzlich kann eine weitere Baugruppe, beispielsweise ein Koaleszer oder ähnliches, vorgesehen sein, die zusammen mit dem Ringfilterelement auswerfbar ist. Die weitere Baugruppe bzw. die Heizeinrichtung sind dabei vorzugsweise oberhalb der oberen Endscheibe des Ringfilterelementes angeordnet, so dass diese durch den ersten Auswerfer von unten zusammen mit dem Ringfilterelement aus dem Filtertopf gedrückt werden können. Selbstverständlich ist auch ein Herausziehen der Heizeinrichtung bzw. der weiteren Baugruppe denkbar, sofern diese oberhalb der oberen Endscheibe des Ringfilterelementes angeordnet ist, wobei in diesem Fall die Heizeinrichtung bzw. die weitere Baugruppe eine fluchtend zum zentralen Innengewinde der oberen Endscheibe ausgerichtete Durchgangsöffnung aufweisen muss.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: eine erfindungsgemäße Filtereinrichtung in einer Schnittdarstellung bei einer ersten Ausführungsform des ersten Auswerfers,
- Fig. 2: eine Darstellung wie in Fig. 1, jedoch bei einer zweiten Ausführungsform des ersten Auswerfers,
- Fig. 3: eine Darstellung wie in Fig. 1, jedoch mit einem zweiten Auswerfer,
- Fig. 4: eine Ansicht von oben auf eine mögliche Ausführungsform einer oberen Endscheibe eines Ringfilterelementes Einschrauben des zweiten Auswerfers.

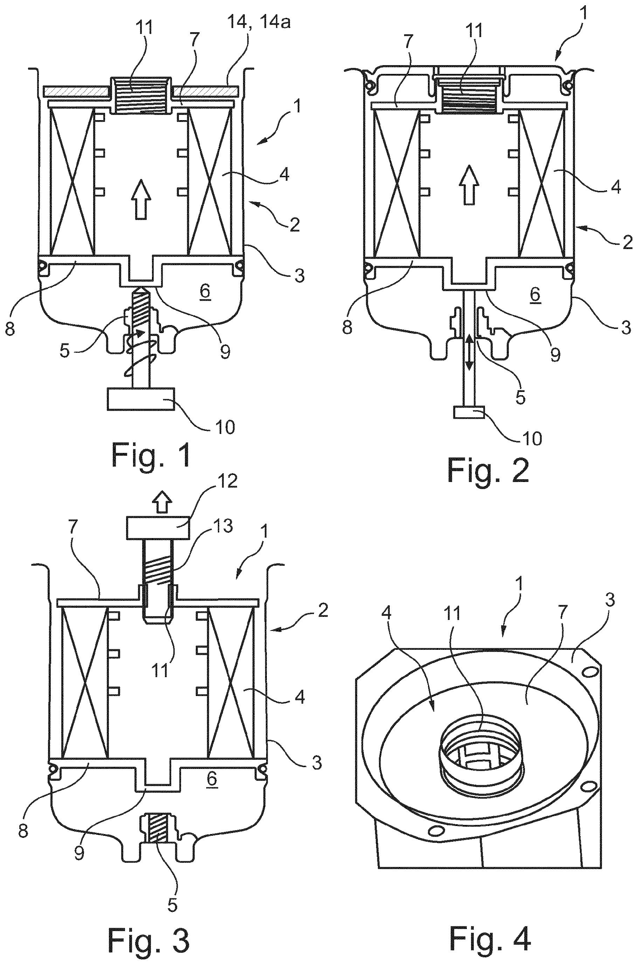

Entsprechend den Fig. 1 bis 3, weist eine erfindungsgemäße Filtereinrichtung 1 ein Filtergehäuse 2 auf, welches einen Filtertopf 3 sowie einen nicht dargestellten Filtergehäusedeckel umfasst. Im Filtergehäuse 2 ist dabei ein Ringfilterelement 4 angeordnet, wobei im Filtertopf 3 zusätzlich eine bodenseitige Öffnung 5 vorgesehen ist, in die im Betriebszustand einer Filtereinrichtung 1 zur Filtrierung von Kraftstoff ein ebenfalls nicht gezeigter Wasserstandssensor mit zugehöriger Wasserablaufeinrichtung dichtend eingeführt werden kann bzw. ist. Der Wasserstandssensor ermittelt dabei einen Wasserstand in einem Wassersammelraum 6 unterhalb des Ringfilterelementes 4. Bei Bedarf wird über die Wasserablaufeinrichtung das angesammelte Wasser abgelassen.

Falls statt eines Wasserstandssensors eine Ablassschraube vorgesehen ist, z.B. bei Filtereinrichtungen 1 zur Filtrierung von Öl, ist während des Betriebs diese Ablassschraube, wie sie z.B. aus der DE 10 2010 004 404 bekannt ist, dicht in die bodenseitige Öffnung 5 eingeschraubt.

Das Ringfilterelement 4 weist in bekannter Weise eine obere Endscheibe 7 sowie eine untere Endscheibe 8 auf, die mit dem dazwischen angeordneten faltensternartigen Filtermaterial dichtend verbunden sind. Das Ringfilterelement 4 muss je nach Beanspruchung turnusmäßig gewechselt werden, wozu die untere Endscheibe 8 des Ringfilterelementes fluchtend zur bodenseitigen Öffnung 5 eine Abstützfläche 9 aufweist, mit der ein erster Auswerfer 10, der durch die bodenseitige Öffnung 5 geführt ist, in direkten Druckkontakt gebracht werden kann. Ein derartiger erster Auswerfer 10 ist beispielsweise gemäß den Fig. 1 und 2 gezeigt.

Zum von unten Herausdrücken des Ringfilterelementes 4 kann der erste Auswerfer 10, wie dies gemäß der Fig. 2 gezeigt ist, einfach durch die bodenseitige Öffnung 5 des Filtertopfes 3 geführt und gegen die Abstützfläche 9 gedrückt werden. Denkbar ist auch, dass die bodenseitige Öffnung 5 ein Innengewinde und der erste Auswerfer 10 ein komplementär dazu ausgebildetes Außengewinde aufweisen, wie dies beispielsweise gemäß der Fig. 1 gezeigt ist, so dass der erste Auswerfer 10 in die bodenseitige Öffnung 5 eingeschraubt und durch die Drehbewegung das Ringfilterelement 4 nach oben aus dem Filtertopf 3 herausgedrückt wird.

Zusätzlich oder alternativ kann die obere Endscheibe 7 des Ringfilterelementes 4 ein zentrales Innengewinde 11 aufweisen (vgl. Fig. 4), wobei ein zweiter Auswerfer 12 mit einem komplementär zu diesem Innengewinde 11 der oberen Endscheibe 7 ausgebildeten Außengewinde 13 ausgerüstet ist. Durch ein Eindrehen des zweiten Auswerfers 12 mit seinem Außengewinde 13 in das Innengewinde 11 der oberen Endscheibe 7 kann eine zugfeste Verbindung zwischen dem zweiten Auswerfer 12 und dem Ringfilterelement 4 geschaffen werden, um das Ringfilterelement 4 einfach aus dem Filtertopf 3 herausziehen zu können.

Selbstverständlich können dabei der erste Auswerfer 10 und der zweite Auswerfer 12 identisch ausgebildet sein, was bedeutet, dass diese sowohl von oben als auch von unten in beschriebener Weise mit dem Ringfilterelement 4 verbindbar sind.

Generell kann die erfindungsgemäße Filtereinrichtung 1 als Kraftstoff- oder als Schmierstofffilter ausgebildet sein und zusätzlich eine Heizeinrichtung 14 bzw. eine weitere Baugruppe 14a aufweisen, die in bekannter Weise zusammen mit dem Ringfilterelement 4 ausgeworfen werden können.

Beansprucht ist auch selbstverständlich ein Ringfilterelement 4 für eine derartige Filtereinrichtung 1, an der sich ein erster Auswerfer 10 beim Auswerfen des Ringfilterelements 4 aus der Filtereinrichtung 1 abstützen kann, das heißt ein Ringfilterelement 4, welches an seiner unteren Endscheibe 8 eine entsprechende Abstützfläche 9 aufweist. Ebenso unter Schutz gestellt ist ein Ringfilterelement 4, welches zusätzlich oder alternativ zur Abstützfläche 9 an seiner oberen Endscheibe 7 ein Innengewinde 11 aufweist, welches zugkraftübertragend mit dem zweiten Auswerfer 12 verbindbar ist, um das Ringfilterelement 4 einfach und schnell aus dem Filtergehäuse 2 ziehen zu können.

Im Unterschied zum Stand der Technik greift sowohl der erste Auswerfer 10 als auch der zweite Auswerfer 12, welche generell baugleich ausgebildet sein können, direkt am Ringfilterelement 4 bzw. an dessen Endscheiben 7, 8 an, wodurch zusätzliche Arme, Konsolen, etc., wie diese aus dem Stand der Technik bekannt sind, vermieden werden können.

Alternativ kann am Filtergehäuse 2 auch eine Ablassschraube gemäß der DE 10 2010 004 404 A1 oder eine mehrteilige Ablassschraube vorgesehen werden, deren innerer Teil nach dem Herausschrauben eine Ablauföffnung frei gibt. Durch diese Öffnung kann dann der Auswerfer 12 hindurch gesteckt oder geschraubt werden, um das Ringfilterelement 4 aus dem Filtergehäuse 2 aus zu werfen.

In allen Fällen wird sofern die Filtereinrichtung 1 im Betrieb - wie in den Figuren dargestellt - vertikal im Fahrzeug befestigt und oben in der Figur entspricht auch oben im Einbauzustand, was bedeutet das die Filtereinrichtung 1 durch die bodenseitige Öffnung 5 entleert werden kann. Das heißt, wenn ein Filterelementwechsel ansteht, wird der Filtergehäusedeckel vom Filtergehäusetopf gelöst und durch die bodenseitige Öffnung 5 kann, wenn die dort dichtend angebrachte Ablassschraube gelockert oder herausgedreht wurde die Flüssigkeit, die im Filtergehäuse 2 verblieben ist, ablaufen. Erst danach wird durch Einführen des Auswerfers 12 durch die bodenseitige Öffnung 5 das Ringfilterelement 4 aus dem Filtergehäuse 2 ausgeworfen.

Im Fall der alternativen Ausführungsform in Fig. 3 wird die in der bodenseitigen Öffnung 5 befindliche Ablassschraube soweit geöffnet bis die Flüssigkeit aus dem Filtergehäuse ablaufen kann und dann wird der Auswerfer 12 an der oberen Endscheibe 7 befestigt, um das Ringfilterelement 4 aus dem Filtergehäuse 2 entnehmen zu können.

## Patentansprüche

1. Filtereinrichtung (1) mit einem Filtergehäuse (2), in welchem ein Ringfilterelement (4) angeordnet ist, wobei im Filtergehäuse (2) eine bodenseitige Öffnung (5) vorgesehen ist,
**dadurch gekennzeichnet, dass**
- eine untere Endscheibe (8) des Ringfilterelementes (4) fluchtend zur bodenseitigen Öffnung (5) eine Abstützfläche (9) aufweist, wobei ein erster Auswerfer (10) vorgesehen ist, der durch die bodenseitige Öffnung (5) geführt und in direkten Druckkontakt mit der Abstützfläche (9) gebracht werden kann, um das Ringfilterelement (4) aus dem Filtergehäuse (2) zu drücken, und/oder
- eine obere Endscheibe (7) des Ringfilterelements (4) ein zentrales Innengewinde (11) aufweist, wobei ein zweiter Auswerfer (12) mit einem komplementär zum Innengewinde (11) der oberen Endscheibe (8) ausgebildeten Außengewinde (13) vorgesehen ist, der mit dem Außengewinde (13) verschraubbar ist, um das Ringfilterelement (4) aus dem Filtergehäuse (2) zu ziehen, und
- eine Heizeinrichtung (14) vorgesehen ist, die zusammen mit dem Ringfilterelement (4) auswerfbar ist.

2. Filtereinrichtung nach Anspruch 1, erste Alternative,
**dadurch gekennzeichnet,**
**dass** die bodenseitige Öffnung (5) ein Innengewinde und der erste Auswerfer (10) ein komplementär dazu ausgebildetes Außengewinde aufweisen.

3. Filtereinrichtung nach Anspruch 1 oder 2,
**dadurch gekennzeichnet,**
**dass** die bodenseitige Öffnung (5) zentral angeordnet ist.

4. Filtereinrichtung nach einem der Ansprüche 1 bis 3,
**dadurch gekennzeichnet,**
**dass** die Filtereinrichtung (1) als Kraftstoff- oder als Schmierstofffilter ausgebildet ist.

5. Filtereinrichtung nach Anspruch 4,
**dadurch gekennzeichnet,**
**dass** eine weitere Baugruppe (14a) vorgesehen ist, die zusammen mit dem Ringfilterelement (4) auswerfbar ist.

6. Filtereinrichtung nach einem der Ansprüche 1 bis 5,
**dadurch gekennzeichnet,**
**dass** eine zweiteilige Ablassschraube die bodenseitige Öffnung (5) im Betrieb dicht verschließt, und der erste Auswerfer (10) durch die Ablassschraube hindurchgreifen kann, um das Ringfilterelement (4) auszuwerfen.

7. Filtereinrichtung nach einem der Ansprüche 1 bis 6,
**dadurch gekennzeichnet,**
**dass** der erste Auswerfer (10) und er zweite Auswerfer (12) baugleich sind.

8. Filtereinrichtung nach einem der Ansprüche 1 bis 7,
**dadurch gekennzeichnet,**
**dass** das Filtergehäuse (2) einen Filtergehäusedeckel und einen Filtergehäusetopf (3) aufweist, wobei die bodenseitige Öffnung (5) in einem der beiden Filtergehäuseteile vorgesehen ist.

## Claims

1. Filter device (1) having a filter housing (2), in which a ring filter element (4) is arranged, wherein a base-end opening (5) is provided in the filter housing (2),
**characterised in that**
- a lower end disc (8) of the ring filter element (4) has a support surface (9) aligned with the base-end opening (5), wherein a first ejector (10) is provided, which can be guided through the base-end opening (5) and can be brought into direct pressure contact with the support surface (9), in order to press the ring filter element (4) out of the filter housing (2), and/or
- an upper end disc (7) of the ring filter element (4) has a central internal thread (11), wherein a second ejector (12) is provided with an external thread (13) designed to be complementary to the internal thread (11) of the upper end disc (8), which can be threadedly engaged with the external thread (13), in order to pull the ring filter element (4) out of the filter housing (2), and
- a heating device (14) is provided, which can be ejected together with the ring filter element (4).

2. Filter device according to claim 1, first alternative,
**characterised in**
**that** the base-end opening (5) has an internal thread and the first ejector (10) has an external thread designed to be complementary thereto.

3. Filter device according to any one of claims 1 or 2,
**characterised in**
**that** the base-end opening (5) is arranged centrally.

4. Filter device according to any one of claims 1 to 3,
**characterised in**
**that** the filter device (1) is designed as a fuel filter or as a lubricant filter.

5. Filter device according to claim 4,
**characterised in**
**that** a further assembly (14a) is provided, which can be ejected together with the ring filter element (4).

6. Filter device according to any one of claims 1 to 5,
**characterised in**
**that** a two-piece drain plug tightly seals the base-end opening (5) during operation, and the first ejector (10) can engage through the drain plug, in order to eject the ring filter element (4).

7. Filter device according to any one of claims 1 to 6,
**characterised in**
**that** the first ejector (10) and the second ejector (12) are identical in construction.

8. Filter device according to any one of claims 1 to 7,
**characterised in**
**that** the filter housing (2) has a filter housing cover and a filter housing pan (3), wherein the base-end opening (5) is provided in one of the two filter housing parts.

## Revendications

1. Dispositif de filtre (1) avec un boîtier de filtre (2), dans lequel un élément de filtre annulaire (4) est disposé, dans lequel une ouverture (5) côté fond est prévue dans le boîtier de filtre (2),
**caractérisé en ce que**
- une rondelle d'extrémité inférieure (8) de l'élément de filtre annulaire (4) présente une surface d'appui (9) en affleurement avec l'ouverture (5) côté fond, dans lequel un premier éjecteur (10) est prévu, qui peut être guidé à travers l'ouverture (5) côté fond et peut être amené en contact de pression direct avec la surface d'appui (9) pour pousser l'élément de filtre annulaire (4) hors du boîtier de filtre (2), et/ou
- une rondelle d'extrémité supérieure (7) de l'élément de filtre annulaire (4) présente un filetage intérieur (11) central, dans lequel un deuxième éjecteur (12) avec un filetage extérieur (13) réalisé de manière complémentaire par rapport au filetage intérieur (11) de la rondelle d'extrémité supérieure (8) est prévu, qui peut être vissé au filetage extérieur (13) pour tirer l'élément de filtre annulaire (4) hors du boîtier de filtre (2), et
- un dispositif de chauffage (14) est prévu, qui peut être éjecté conjointement avec l'élément de filtre annulaire (4).

2. Dispositif de filtre selon la revendication 1, première alternative,
**caractérisé en ce**
**que** l'ouverture (5) côté fond présente un filetage intérieur et le premier éjecteur (10) présente un filetage extérieur réalisé de manière complémentaire par rapport au filetage intérieur.

3. Dispositif de filtre selon la revendication 1 ou 2,
**caractérisé en ce**
**que** l'ouverture (5) côté fond est disposée au centre.

4. Dispositif de filtre selon l'une quelconque des revendications 1 à 3,
**caractérisé en ce**
**que** le dispositif de filtre (1) est réalisé sous la forme d'un filtre à carburant ou sous la forme d'un filtre à lubrifiant.

5. Dispositif de filtre selon la revendication 4,
**caractérisé en ce**
**qu'**un autre groupe modulaire (14a) est prévu, qui peut être éjecté conjointement avec l'élément de filtre annulaire (4).

6. Dispositif de filtre selon l'une quelconque des revendications 1 à 5,
**caractérisé en ce**
**qu'**une vis de vidange en deux parties ferme de manière étanche l'ouverture (5) côté fond lors du fonctionnement, et le premier éjecteur (10) peut traverser la vis de vidange pour éjecter l'élément de filtre annulaire (4).

7. Dispositif de filtre selon l'une quelconque des revendications 1 à 6,
**caractérisé en ce**
**que** le premier éjecteur (10) et le deuxième éjecteur (12) sont de construction identique.

8. Dispositif de filtre selon l'une quelconque des revendications 1 à 7,
**caractérisé en ce**
**que** le boîtier de filtre (2) présente un couvercle de logement de filtre et un pot de logement de filtre (3), dans lequel l'ouverture (5) côté fond est prévue dans une des deux parties de boîtier de filtre.
